# EUROPEAN PATENT SPECIFICATION

(11) **EP 3 026 860 B1**
(45) Date of publication and mention of the grant of the patent: **19.02.2020**
(21) Application number: 13889908.3
(22) Date of filing: 24.07.2013
(51) Int. Cl.: H04L 12/24

(54) **METHOD AND SYSTEM FOR TRANSMISSION MANAGEMENT OF FULL CONFIGURATION SYNCHRONIZATION BETWEEN EML-NML**
VERFAHREN UND SYSTEM ZUR ÜBERTRAGUNGSVERWALTUNG VON VOLLSTÄNDIG KONFIGURIERTEN SYNCHRONISATIONEN ZWISCHEN EML UND NML
PROCÉDÉ ET SYSTÈME DE GESTION DE TRANSMISSION DE SYNCHRONISATION DE CONFIGURATION COMPLÈTE ENTRE EML ET NML

(30) Priority: 22.07.2013 CN 201310308141
(43) Date of publication of application: 01.06.2016
(73) Proprietor: Fiberhome Telecommunication Technologies Co. Ltd, Hubei 430074 (CN)
(72) Inventor: ZHANG, Liya, Wuhan Hubei 430074 (CN); LIU, Yue, Wuhan Hubei 430074 (CN)
(74) Representative: Casalonga
(86) International application number: PCT/CN2013/079997
(87) International publication number: WO 2015/010272

(56) References cited:
- EP-A2- 0 862 304
- CN-A- 1 741 535
- CN-A- 1 860 732
- US-A1- 2007 276 951
- Telemanagement Forum: "TMF513 Version 3.2 - Multi-Technology Network Management (MTNM) Business Agreement - Release 3.5", , 1 August 2008 (2008-08-01), XP055337335, Retrieved from the Internet: URL:www.tmforum.org [retrieved on 2017-01-20]
- Telemanagement Forum: "TMF814 Release 3.5 - Multi-Technology Network Management (MTNM) Solution Set -Version 3.2", , 1 August 2008 (2008-08-01), XP055337671, Retrieved from the Internet: URL:www.tmforum.org [retrieved on 2017-01-23]

## Description

### Field of the Invention

The present invention relates to the technical field of EML-NML (Element Management Level - Network Management Level), in particular to method and system for transmission management of full configuration synchronization between EML-NML.

### Background of the prior art

In EML-NML management system, NMS (Network Management System) is required to perform synchronization of full network configuration data of EMS (Element Management System). Since the range of devices under the management of EMS system, the data quantity in need of synchronization is huge. In such case, the s efficiency synchronization is particularly important.

At present, there are two full configuration synchronization solutions in the industry, one is scheduling through fine granulation interfaces, such as get All Managed Element; the other is that all the configurations are transferred through bypass interface FTP (File Transfer Protocol), such as get Inventory(get inventory configuration) method put forward by MTOSI (Multi - Technology Operations System Interface).

In these two solutions, the former includes the interface based synchronization configuration data in the MTNM (Multi - Technology Network Management)/MTOSI standard put forward on TMF (Tele Management Forum). The deficiencies of this former solution consists in that, when configuration becomes big, very high frequency of scheduling between NMS-EMS is required, and excessive time is spent in the network handshake interaction; at present, the latter solution also includes the get inventory configuration method defined in MTOSI. This interface is intended to generate nested tree structure XML (Extensible Markup Language) based on the configuration data and transfer the compressed data to NMS. This interface can significantly reduce the network handshake time. However, the configuration data to be get by this method generates a XML file in tree nested format, so that in the process of getting whole network configuration, the XML file is huge, leading to slow NMSes resolution and difficulties in processing; in addition, when NMSes request splitting XML into a plurality of files according to appropriate size, it is difficult to realize this request on EMS side. The method of getting inventory configuration as provided by MTOSI allows NMSes to randomly combine synchronous entity object types, so that it is difficult for the service provider- EMSes to realize the optimal parallel processing under multiple designated conditions, leading to low efficiency, while there is no solution describing the sharing of configuration data.

The existing two full configuration synchronization solutions involve the following deficiencies:
(1) The method based on interface synchronization configuration data requires excessive network handshake interaction time.
(2) The method of getting inventory configuration as provided by MTOSI does not support convenient splitting of XML files.
(3) In the method of getting inventory configuration as provided by MTOSI, a plurality of NMSes fail to share configuration data.
(4) The method of getting inventory configuration as provided by MTOSI features excessively flexible synchronization conditions, which is not convenient to improve the degree of parallelism during full configuration synchronization.

Telemanagement Forum: "TMF513 Version 3.2-Multi-Technology Network Management (MTNM) Business Agreement-Release 3.5", 1 August 2008 (2008-08-01), XP055337335, represents the TMF513 standard from the TeleManagement Forum.

Telemanagement Foroum: "TMF814 Release 3.5-Multi-Technology Network Management (MTNM) Solution Set-Version 3.2", 1 August 2008 (2008-08-01), XP055337671, represents the TM-Forum standard TMF 814.

EP 0862304 A2 discloses a method of downloading a file from an Internet server 12 to an Internet client 10, preferably without action by the Internet client. The method begins by associating the file into a set of components at the server. A profile of the file is then generated. This profile includes identifying information for the file as well as for each component thereof. Such information preferably includes an identifier, a size value, and a code uniquely identifying the component. The file is transferred by initiating a download sequence by which each component is transferred, one-by-one, from the server to the client using an Internet protocol. When the download sequence is complete, the individual components are reassembled into the file using the profile without action by the Internet client. If the transmission is interrupted for any reason, the download sequence is restarted with the component affected by the interruption. This avoids the need to retransfer the entire file.
US 2007/0276951 A1 discloses a system and method to reduce the time to transfer files from one computer to another over a communications network, such as the Internet, through a client/server architecture includes a sending client, a receiving client, and a repository system. The sending client logs into the server and transmits data such as receiving names and information about a file to the repository system. The repository system directs the sending client to send the file to the repository system. The file that is intended to be transferred from a sending client to a receiving client is partitioned into multiple block portions of the existing file, prior to transfer. Each block subportion of original file is compressed and queued for transmission to the repository system. The compressed blocks are kept in a cue, encrypted, and transmitted asynchronously to the repository system over a selected communications network.

### Summary of the Invention

With view of the deficiencies of the prior art, it is the technical objective of the present invention to provide a method and system for transmission management of full configuration synchronization between EML (Element Management Level) and NML (Network Management Level),so as to avoid a large amount of network handshake interaction time, facilitate splitting XML (Extensible Markup Language) configuration files, realize a plurality of NMSes sharing configuration data, reduce full synchronization frequency between EML and NML, fix the conditions within the range of synchronization configuration and improve the degree of parallelism of full configuration synchronization during big configuration data synchronization.

The present invention provides a method for transmission management of full configuration synchronization between an Element Management Level, EML, comprising a plurality of Element Management Systems, EMSes, and a Network Management Level, NML, comprising a plurality of Network Management Systems, NMSes, with each NMS being able to manage multiple EMSes, characterized by the following steps:
Step S1, a Network Management System, NMS, requests a full configuration synchronization, wherein a process of the full configuration synchronization is divided into three parallel data processing processes according to the duration of configuration data processing and synchronization time needed in each of the data processing process; wherein the three parallel data processing processes are a basic configuration synchronization request process of processing a basic configuration data, a network element cross synchronization request process of processing a network element cross configuration data, and a service routing synchronization request process of processing a service routing configuration data; wherein Step S1 comprises Step 101, Step 102, Step 103, Step 104, Step 105, Step 106, Step 107, Step 108 and Step 109;
Step 101, the NMS sends the basic configuration synchronization request to an EMS through an interaction protocol Internet Inter-ORB Protocol/Simple Object Access Protocol, IIOP/SOAP;
Step 102, the NMS judges whether a progress notification with respect to the basic configuration synchronization request is time-out or completed; wherein the NMS receives a file transfer status notification message regularly transmitted from the EMS; wherein the file transfer status notification message comprises a file transfer status completion ratio and it further comprises a time-out time of a next file transfer status notification message; wherein the time-out time of a next file transfer status notification message is the time when the next file transfer status notification message is expected; wherein the NMS judges whether the EMS is timed out accoding to the time-out time of the next file transfer status notification message and the NMS keeps monitoring the progress of the basic configuration synchronization
   request until the file transfer status completion ratio is 100 % when there is no time-out; wherein in case of time-out, returns to Step 101; after time-out for several times, terminates the full configuration synchronization; when there is no time-out and the file transfer status completion ratio exceeds 50 %, enters Step 104; when the file transfer status completion ratio is 100 %, enters Step 103;
Step 103, the NMS processes the basic configuration data;
Step 104, the NMS sends the network element cross synchronization request to the EMS through the interaction protocol IIOP/SOAP;
Step 105, the NMS judges whether a progress notification with respect to the network element cross configuration synchronization request is timed-out or completed: the NMS judges whether the EMS is timed out, wherein the NMS receives a file transfer status notification message regularly transmitted from the EMS, wherein the file transfer status notification message comprises a file transfer status completion ratio and it further comprises a time-out time of a next file transfer status notification message; wherein the time-out time of a next file transfer status notification message is the time when the next file transfer status notification message is expected; wherein the NMS judges whether the EMS is timed out according to the time-out time of the next file transfer status notification message and the NMS keeps monitoring the progress of the network element cross configuration synchronization request until the file transfer status completion ratio is 100% when there is no time-out; wherein in case of time-out, returns to Step 104; when there is no time-out and the file transfer status completion ratio exceeds 50 %, enters Step 107; when the file transfer status completion ratio is 100 %, enters Step 106;
Step 106, the NMS processes the network element cross configuration data;
Step 107, the NMS sends the service routing synchronization request to the EMS through the interaction protocol IIOP/SOAP;
Step 108, the NMS judges whether a progress notification with respect to the service routing synchronization request is timed-out or completed; the NMS judges whether the EMS is timed out: wherein the NMS receives a file transfer status notification message regularly transmitted from the EMS, wherein the file transfer status notification message comprises a file transfer status completion ratio and it further comprises a time-out time of a next file transfer status notification message, wherein the time-out time of a next file transfer status notification message is the time when the next file transfer status notification message is expected; wherein the NMS judges whether the EMS is timed out according to the time-out time of the next file transfer status notification message and the NMS keeps monitoring the progress of the service routing synchronization request until the file transfer status completion ratio is 100 % when there is no time-out; wherein in case of time-out, returns to Step 107; when the file transfer status completion ratio is 100 %, enters Step 109;
Step 109, the NMS processes the service routing configuration data;
S2, the EMS receives a synchronization request through the interaction protocols IIOP//SOAP, wherein the synchronization request is the basic configuration synchronization request, the network element cross synchronization request or the service routing synchronization request, and the EMS processes the synchronization request; wherein the processing of the synchronization request comprises: the EMS judges whether to process the synchronization request accoding to the current busy status of the EMS,
whether a full configuration synchronization is being processed as well as the time effectiveness of the configuration data;
S3, the EMS performs asynchronous generation of XML configuration files, for the storage of the basic configuration data, the network element cross configuration data or the service routing configuration data;
S4, the EMS regularly reports progress, wherein said feature comprises regularly transmitting a file transfer status notification message to the NMS, wherein the file transfer status notification message comprises a file transfer status completion ratio and it further comprises a time-out time of a next file transfer status notification message, wherein the time-out time of a next file transfer status notification message is the time when the next file transfer status notification message is expected;
S5, the EMS transfers the XML configuration files to a shared FTP server;
S6, the EMS reports the completed result of transferring the XML configuration files to the NMS;
wherein the steps S3-S6 are only performed if the EMS judges to process the synchronization request in Step S2.

On the basis of the said technical solution, the step S2 comprises the following steps:
Step 201, the EMS judges whether the NMS utilizes the configuration data on the shared FTP server, if Yes, proceeding to Step 202; otherwise, proceeding to Step S3;
Step 202, the EMS judges whether another full configuration synchronization from other NMSes is being processed; if Yes, proceeding to Step 203; otherwise, proceeding to Step 204;
Step 203, the EMS returns the following information to the NMS: status: a status flag notifying the NMS that the another full configuration synchronization is being processed, a time-out time of a next file transfer status notification message and a URL address of a target FTP file; and the NMS waits for the next file transfer status notification message according to the time-out time and inspects whether the target FTP file exists on the shared FTP server and performs the configuration data processing;
Step 204, the EMS judges whether it is busy; if Yes, proceeding to Step 205; otherwise, proceeding to Step S3;
Step 205, the EMS returns a notice to the NMS.

On the basis of the said technical solution, the Step S3 comprises the following steps:
after having received the synchronization request from the NMS, the EMS starts a background parallel processing mechanism; according to the object types and range designated by the NMS, the EMS generates management object in an XML format, and the EMS generates the XML configuration files, wherein the XML configuration files meets the following requirements:
(1) according to the object types, the configuration data is divided into a plurality of files in the XML format for storage, wherein the files are the XML configuration files, and the name of the package of all the XML configuration files is designated when the NMS sends the URL address of the target FTP file; the name of the XML configuration file for the storage of object is composed of such basic elements as the name of the object type, a data type, the time when the configuration data is generated as well as a file splitting sequence number;
(2) the XML configuration files are stored according to the object types, each XML configuration files only stores the list of one type of objects, the XML format of each object is kept consistent with the structure defined in TMF, and the time effectiveness of the configuration data is limited through XSD;
(3) the XML configuration files are generated by performing a splitting of the management objects according to the quantity of the management objects.

On the basis of the said technical solution, the format of the time in the name of the XML configuration file for the storage of the said object is "yyyyMMddhhmmss.x", wherein yyyy represents Year, MM represents Month, dd represents
Date, hh represents Hour, mm represents Minute, ss represents Second, x represents one tenth of a second and is 0 as default; the format of the file splitting sequence number is [a_b], wherein a represents a sequence number of current file, b represents a total number of the XML configuration files after splitting, and both a and b are positive integers.

On the basis of the said technical solution, the Step S3 and the Step S4 are performed at the same time, and after the Step S3 and the Step S4 are completed, both enter the Step S5.

On the basis of the said technical solution, the step S5 comprises the following steps: according to the parameters sent by the NMS, the ESM in the background compresses all the XML configuration files into a data package and transfers the data package to the shared FTP server designated by the NMS.

On the basis of the said technical solution, the Step S6 comprises the following steps: after transmission of the data package, the EMS sends a file transfer status notification message with the file transfer status completion ratio being 100 % to the NMS; in this message, the time-out time of the next file transfer status notification message is written as 0; if the generation of the XML configuration files fails, a failure notice is sent to the NMS through a file transfer status notification message.

On the basis of the said technical solution, in Step 102, the process of judging whether the file transfer status completion ratio is 100 % is as follows: judging whether the file transfer status notification message with 100 % file transfer status completion ratio is received, or the XML configuration files have existed on the shared FTP server; so long as any of both conditions is met, the file transfer status completion ratio is 100 %.

On the basis of the said technical solution, the synchronization configuration request in step 101 comprises:
(1) a Uniform Resource Locator, URL, used to designate the shared FTP server; and the name of the designated XML configuration files uploaded by the EMS into the URL address;
(2) the designated certification information of the shared FTP server;
(3) Synchronization range;
(4) List of synchronous configuration types;
(5) the requirements for the XML configuration files, including: a maximal file size, whether compressed, the compression format, whether the configuration data on the shared FTP server is used, and the time effectiveness of the configuration data.

The present invention also provides a system for transmission management of full configuration synchronization between an Element Management Level, EML, comprising a plurality of Element Management Systems, EMSes, and an Network Management Level, NML, comprising a plurality of Network Management Systems, NMSes, with each NMS being able to manage multiple EMSes, with EMSes and NMSes being part of that system and being configured to perform all the steps of any of the method according to the above method for transmission management of full configuration synchronization between an EML and a NML.

As compared with the prior art, the present invention has the following advantages:
(1) The present invention adopts the information model of TMF as basic object model, the interaction protocols support HOP (Internet Inter - ORB Protocol)/SOAP (Simple Object Access Protocol); FTP is adopted as mass data transfer protocol; the method for providing batch configuration synchronization can reduce the network handshake and interaction time.
(2) The present invention improves the format for storage of XML files. According to the object types, it is defined as flat storage format. Each object defines a global positioning information in TMP, so that XML files can be respectively stored according to the object types. The storage of XML files according to object types facilitates NMSes to split the configuration files of XML, rather than the storage objects in tree nested structure defined in MTOSI.
(3) The present invention realizes a plurality of NMSes sharing configuration data through shared FTP server.
(4) The present invention improves the design of XML storage format, so that one XML stores one type of object data information; the present invention also standardizes the XML file designation format to support convenient splitting of XML; in addition, the data validity is inspected through XSD (XML Schemas Definition), and time mark is supported through XML file name, so as to facilitate NMSes to perform time validity check. For example, if XML files on FTP server do not exceed 1 Hr, it is not necessary for NMSes to send synchronization request again, so that the frequency of full synchronization between EML-NML can be reduced.
(5) According to the duration of time consumed in data processing and synchronization, the process of full configuration synchronization is divided by the present invention into three parallel processes: a basic configuration synchronization request process, a network element cross synchronization request process and a service routing synchronization request process; in addition, through the arrangement of FTP interfaces which are fixedly separated, the present fixes the conditions for full configuration synchronization, so as to improve the degree of parallelism during full configuration synchronization between NMS/EMS and reduce the failure rate during full configuration synchronization.
(6) For the file transfer status notification message defined in extended TMF, Next Expire Time is added in the message, so that the time for NMSes waiting for time-out is more reasonable.

### Description of attached drawings

Fig 1 is a structure diagram of full configuration synchronization system between EML-NML in the embodiment of the present invention.
Fig 2 is a flow diagram of the method for transmission management of full configuration synchronization between EML-NML in the embodiment of the present invention.
Fig 3 is the flow diagram of NMSes processing request full synchronization in the embodiment of the present invention.
Fig 4 is the flow diagram of EMSes processing synchronization request in the embodiment of the present invention.

### Detailed Description of Preferred Embodiments

Further detailed description on the present invention is provided with reference to specific embodiments in combination with attached drawings.

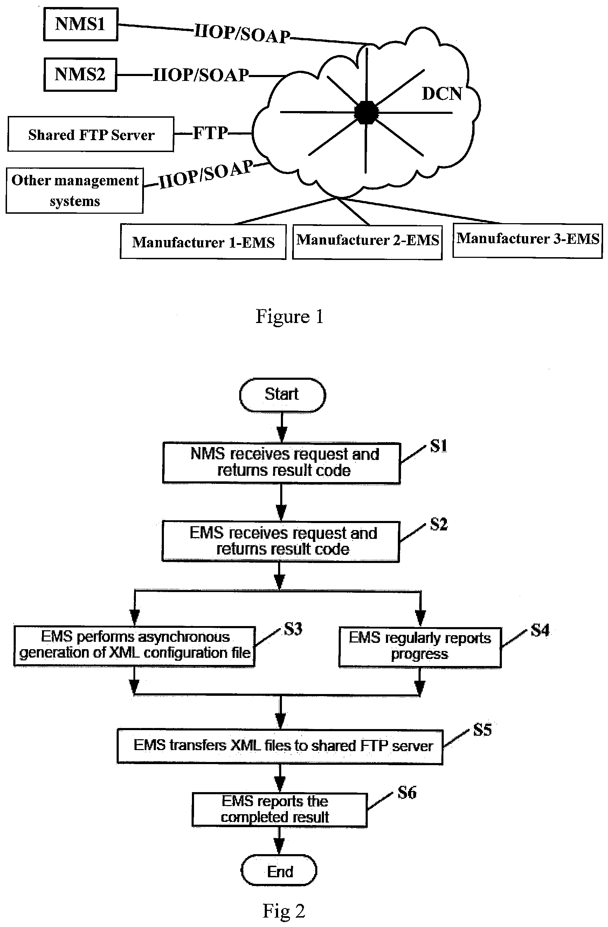

As shown in Fig 1, the embodiment of the present invention also provides a system for transmission management of full configuration synchronization between EML (Element Management Level) and NML (Network Management Level), comprising a DCN (Data Communication Network), a plurality of EMSes (Element Management System) and NMSes (Network Management System), a shared FTP server and other management systems, which are connected with the DCN respectively; arranged in the shared FTP server are FTP interfaces which are fixedly separated, and FTP is employed as a mass data transfer protocol; according to the duration of time consumed in data processing and synchronization, the process of full configuration synchronization is divided by the NMSes into three parallel processes: a basic configuration synchronization request process, a network element cross synchronization request process and a service routing synchronization request process; a basic configuration synchronization request is sent to the EMSes, and the NMSes transfer the basic configuration synchronization request to the EMS side through interaction protocol IIOP/SOAP.

As shown in Fig 2, the embodiment of the present invention provides a method for transmission management of full configuration synchronization between EML - NML, comprising the following steps:
S1, Network management system NMS requests full synchronization:
S2, S2, EMS processes synchronization request; after having received the NMS full configuration synchronization request through interaction protocols such as IIOP/SOAP, judging whether to receive this service request according to the current busy status of EMS, whether the full configuration synchronization is being processed as well as the time effectiveness of full data;
S3, EMS performs asynchronous generation of XML configuration file;
S4, EMS regularly reports progress;
S5, EMS transfers XML files to shared FTP server;
S6, EMS reports the completed result.

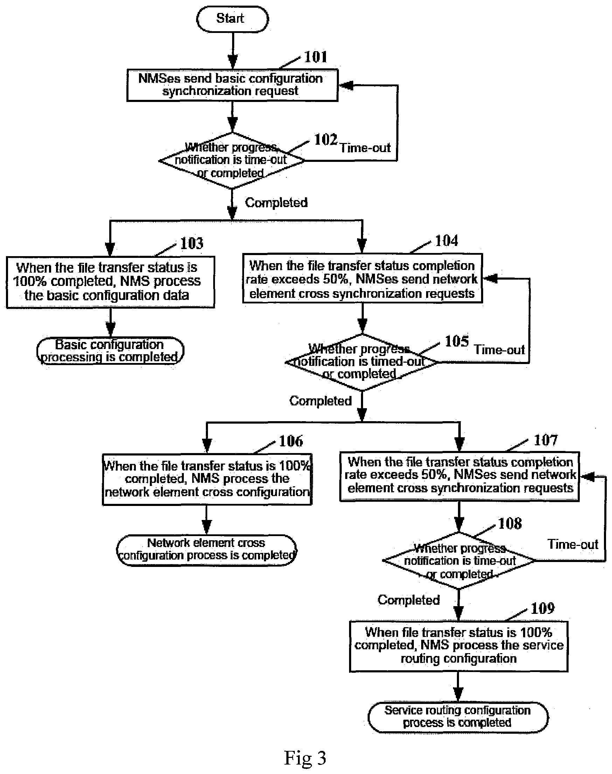

Each of the steps is respectively described in detail as follows:
As shown in Fig 3, the Step S1 specifically comprises the following steps:
Step 101, NMSes send basic configuration synchronization request:
   The process of full configuration synchronization is divided by the NMSes into three parallel processes according to the duration of time consumed in data processing: a basic configuration synchronization request process, a network element cross synchronization request process and a service routing synchronization request process; a basic configuration synchronization request is sent to the EMSes, and the NMSes transfer the following information to the EMS side through interaction protocol IIOP/SOAP:
   (1) Using URL (Uniform Resource Locator) to designate shared FTP server and designate the name of file uploaded by EMS in URL address;
   (2) Designate certification information of FTP server, such as user name and password;
   (3) Synchronization range, such as whole EMS or a subnetwork and so on;
   (4) List of synchronous configuration types, such as synchronization single-disk and port, etc;
   (5) The requirements for storage of files include: The maximal file size, whether compressed, the compression format, whether the data of shared FTP server is used, and the time validity of configuration data;
   All the parameters (1) ∼ (5) sent by the said interaction protocol are included in the synchronization configuration request, and the object types of basic configuration are written in the list of configuration types;
Step 102, judging whether the progress notification is timed-out or completed:
   Using NT_FILE_TRANSFER_STATUS defined by TMF as the file transfer progress notification message between EMS-NMS and making the following extension: adding Next Expire Time in this notification message in the unit of Second, namely time when the next file transfer status notification message is expected to be sent; NMSes judge whether EMS side is timed out according to the Next Expire Time; if time-out, returning to step 101 and resending the basic configuration synchronization request; after time-out for many times, terminating the full configuration synchronization; if not time-out and the file transfer status completion ratio exceeds 50 %, entering the step 104; when the file transfer status is 100 % completed, starting the parallel processing mechanism and entering the step 103; judging whether the file transfer status is 100 % completed, it is necessary to judge whether 100 % completed file transfer status notification message is received, or the designated configuration files have exist on FTP server; if one of both is met, it is judged that the file transfer status is 100 % completed;
Step 103, when the file transmission status is 100 % completed, the parallel processing mechanism is started, and basic configuration data is processed by NMSes; this step is a background parallel processing step;
Step 104, when the file transfer status completion ratio exceeds 50 %, NMSes send network element cross synchronization request;
   In this step, most of the parameters of network element cross synchronization request sent by NMSes to EMSes are same as the parameters of the synchronization configuration request in the step 101. Except for that network element cross and MFDFR (MatrixFlowDowmainFragment) are indicated in the list of configuration types, performing synchronization for network element cross and flow domain fragment;
Step 105, judging whether the progress notification is timed-out or completed; NMSes judge whether EMS side is timed out according to the time prompted in the file transfer state message; if it is timed out, returning the step 104, and resending the network element cross configuration synchronization request; when it is not timed-out and the file transfer completion status completion ratio exceeds 50 %, entering the step 107; when the file transfer status is 100 % completed, starting the parallel processing mechanism and entering the step 106;
Step 106, when the file transmission state is 100 % completed, the parallel processing mechanism is started, and network element cross configuration data is processed by NMSes; this step is a background parallel processing step;
Step 107, when the file transfer status completion ratio exceeds 50 %, NMSes send the service routing synchronization request;
Step 108, judging whether the progress notification is timed-out or completed; NMSes judge whether the EMS side is timed out according to the time prompted in the file transfer status message; if it is timed out, returning the step 107 and resending the service routing synchronization request; when the file transfer status is 100 % completed, starting the parallel processing mechanism and entering the step 109;
Step 109, when the file transmission status is 100 % completed, the parallel processing mechanism is started, and service routing configuration data is processed by NMSes; this step is a background parallel processing step;

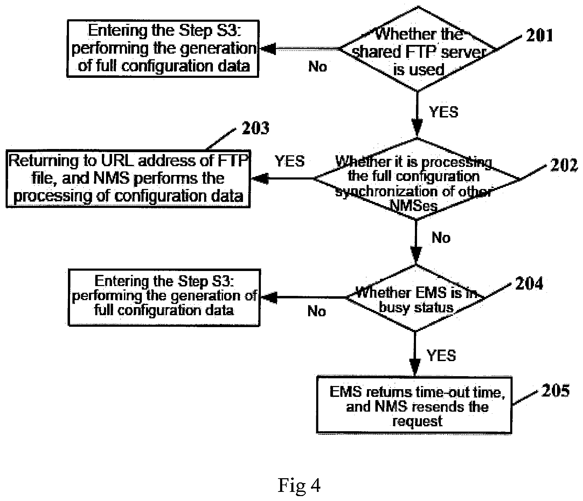

As shown in Fig 4, the Step S2 specifically comprises the following steps:
Step 201, judging whether NMS utilizes the data of shared FTP server, if Yes, proceeding to step 202; otherwise, proceeding to Step S3 to perform the generation of full configuration data;
Step 202, judging whether EMS is processing the full configuration synchronization of other NMSes; if Yes, proceeding to the Step 203; otherwise, proceeding to the Step 204;
Step 203, EMS returns the URL address of FTP file, and NMS performs configuration data processing: EMS returns the following information to NMS: (1) status: Notifying that NMS is processing configuration, (2) waiting for the time-out time of the next file transfer status notification message; (3) URL address information of target FTP file; NMS waits for file transfer status notification according to the returned time-out time and inspects whether the designated configuration file exists on FTP server;
Step 204, judging whether EMS is in busy status; if Yes, proceeding to step 205; otherwise, proceeding to Step S3 to perform the generation of full configuration data;
Step 205, EMS returns notice; after waiting time-out, NMS resends request.

The Step specifically comprises the following steps:
After having received NMS request, EMS starts the background parallel processing mechanism; according to the object type and range designated by NMSes, EMS generates management object in XML format; to facilitate the splitting of XML file, XML format for storage of configuration data must meet the following requirements:
(1)File name: according to object types, the global configuration is divided into a plurality of XMLs for storage, and the name of compression package of all XML files is designated when NMS is sending the URL address of object FTP file; XML file name of the storage object is composed of such basic elements as the name of object type, the data type, the time when the configuration data is generated as well as the sequence number for splitting of file, wherein the time format is " yyyyMMddhhmmss.x ",where yyyy represents Year, MM represents Month, dd represents date, hh represents Hour, mm represents minute, ss represents second, x represents tenth of a second and is 0 in default; the format of sequence number for splitting file is [a_b], wherein a represents the sequence number of current file, b represents the total number of files after splitting, both a and b are positive integers.
   For example: ME_Configlog_20100617110304.0_, ME (network element) represents that the configuration information of network element object is stored in the current file; ConfigLog (configuration record) represents that the data of configuration type is stored in this XML; 20100617110304.0 represents that this data is generated at 11'clock, 3 min, 4 second on June 17, 2010, [1_1] represents the network element configuration of the whole network is divided into one file, and this file is the first splitted file;
(2)File format: the files are stored according to object types, each XML files only stores the list of this type of objects, the storage format for each target XML is kept consistent with the structure defined in TMF, and the validity of data is limited through XSD;
(3)Splitting of files: since independent objects rather than nested tree object structure are used for XML storage, the splitting of files can be made according to the quantity of objects;

The step S4 specifically comprises the following steps: in the asynchronous generation of configuration data, EMS regularly reports the progress as well as the time-out time of next file transfer status message to NMS; after all the configurations requested by NMSes have generated XML files, proceeding to Step S5; The step S5 specifically comprises the following steps: according to the parameters sent by NMSes, ESMes at background compress all XML files as a data package and transfer the data package to the FTP server designated by NMSes.

The step S6 specifically comprises the following steps: after transmission of XML data package, EMSes send file transfer status message with transfer completion ratio being 100 % to NMSes; in this message, the timed-out time of the next message is written as 0; if the generation of configuration data fails, failure notice is sent to NMSes through the file transfer status message.

Those skilled in the art can make various modifications and transformations to the embodiments of the present invention. Provided that these modifications and transformations fall within the claims of the present invention, these modifications and transformations are also within the protection range of the present invention.

The contents which are not described in detail in this specification fall within the prior art for those skilled in the art.

## Claims

1. A method for transmission management of full configuration synchronization between an Element Management Level, EML, comprising a plurality of Element Management Systems, EMSes, and a Network Management Level, NML, comprising a plurality of Network Management Systems, NMSes, with each NMS being able to manage multiple EMSes,
**characterized by** the following steps:
**Step S1,** a Network Management System, NMS, requests a full configuration synchronization, wherein a process of the full configuration synchronization is divided into three parallel data processing processes according to the duration of configuration data processing and synchronization time needed in each of the data processing process; wherein the three parallel data processing processes are a basic configuration synchronization request process of processing a basic configuration data, a network element cross synchronization request process of processing a network element cross configuration data, and a service routing synchronization request process of processing a service routing configuration data; wherein Step S1 comprises Step 101, Step 102, Step 103, Step 104, Step 105, Step 106, Step 107, Step 108 and Step 109;
**Step 101**, the NMS sends the basic configuration synchronization request to an EMS through an interaction protocol Internet Inter-ORB Protocol/Simple Object Access Protocol, IIOP/SOAP;
**Step 102**, the NMS judges whether a progress notification with respect to the basic configuration synchronization request is time-out or completed; wherein the NMS receives a file transfer status notification message regularly transmitted from the EMS; wherein the file transfer status notification message comprises a file transfer status completion ratio and it further comprises a time-out time of a next file transfer status notification message; wherein the time-out time of a next file transfer status notification message is the time when the next file transfer status notification message is expected; wherein the NMS judges whether the EMS is timed out according to the time-out time of the next file transfer status notification message and the NMS keeps monitoring the progress of the basic configuration synchronization request until the file transfer status completion ratio is 100% when there is no time-out; wherein in case of time-out, returns to Step 101; after time-out for several times, terminates the full configuration synchronization; when there is no time-out and the file transfer status completion ratio exceeds 50%, enters Step 104; when the file transfer status completion ratio is 100%, enters Step 103;
**Step 103**, the NMS processes the basic configuration data;
**Step 104**, the NMS sends the network element cross synchronization request to the EMS through the interaction protocol IIOP/SOAP;
**Step 105**, the NMS judges whether a progress notification with respect to the network element cross configuration synchronization request is timed-out or completed: the NMS judges whether the EMS is timed out, wherein the NMS receives a file transfer status notification message regularly transmitted from the EMS, wherein the file transfer status notification message comprises a file transfer status completion ratio and it further comprises a time-out time of a next file transfer status notification message, wherein the time-out time of a next file transfer status notification message is the time when the next file transfer status notification message is expected; wherein the NMS judges whether the EMS is timed out according to the time-out time of the next file transfer status notification message and the NMS keeps monitoring the progress of the network element cross configuration synchronization request until the file transfer status completion ratio is 100% when there is no time-out; wherein in case of time-out, returns to Step 104; when there is no time-out and the file transfer status completion ratio exceeds 50%, enters Step 107; when the file transfer status completion ratio is 100%, enters Step 106;
**Step 106,** the NMS processes the network element cross configuration data;
**Step 107**, the NMS sends the service routing synchronization request to the EMS through the interaction protocol IIOP/SOAP;
**Step 108**, the NMS judges whether a progress notification with respect to the service routing synchronization request is timed-out or completed, the NMS judges whether the EMS is timed out: wherein the NMS receives a file transfer status notification message regularly transmitted from the EMS, wherein the file transfer status notification message comprises a file transfer status completion ratio and it further comprises a time-out time of a next file transfer status notification message, wherein the time-out time of a next file transfer status notification message is the time when the next file transfer status notification message is expected; wherein the NMS judges whether the EMS is timed out according to the time-out time of the next file transfer status notification message and the NMS keeps monitoring the progress of the service routing synchronization request until the file transfer status completion ratio is 100% when there is no time-out; wherein in case of time-out, returns to Step 107 ; when the file transfer status completion ratio is 100%, enters Step 109;
**Step 109**, the NMS processes the service routing configuration data;
**S2**, the EMS receives a synchronization request through the interaction protocols IIOP//SOAP, wherein the synchronization request is the basic configuration synchronization request, the network element cross synchronization request or the service routing synchronization request, and the EMS processes the synchronization request, wherein the processing of the synchronization request comprises: the EMS judges whether to process the synchronization request according to the current busy status of the EMS, whether a full configuration synchronization is being processed as well as the time effectiveness of the configuration data;
**S3**, the EMS performs asynchronous generation of XML configuration files, for the storage of the basic configuration data, the network element cross configuration data or the service routing configuration data;
**S4**, the EMS regularly reports progress, wherein said feature comprises regularly transmitting a file transfer status notification message to the NMS, wherein the file transfer status notification message comprises a file transfer status completion ratio and it further comprises a time-out time of a next file transfer status notification message, wherein the time-out time of a next file transfer status notification message is the time when the next file transfer status notification message is expected;
**S5**, the EMS transfers the XML configuration files to a shared FTP server;
**S6**, the EMS reports the completed result of transferring the XML configuration files to the NMS; wherein the steps S3-S6 are only performed if the EMS judges to process the synchronization request in Step S2.

2. The method for transmission management of full configuration synchronization between the EML and the NML of claim 1, **characterized in that**, the Step S2 comprises the following steps:
**Step 201**, the EMS judges whether the NMS utilizes the configuration data on the shared FTP server, if Yes, proceeding to Step 202; otherwise, proceeding to Step S3;
**Step 202**, the EMS judges whether another full configuration synchronization from other NMSes is being processed; if Yes, proceeding to Step 203; otherwise, proceeding to Step 204;
**Step 203**, the EMS returns the following information to the NMS: status: a status flag notifying the NMS that the another full configuration synchronization is being processed, a time-out time of a next file transfer status notification message and a URL address of a target FTP file; and the NMS waits for the next file transfer status notification message according to the time-out time and inspects whether the target FTP file exists on the shared FTP server and performs the configuration data processing;
**Step 204**, the EMS judges whether it is busy; if Yes, proceeding to Step 205; otherwise, proceeding to Step S3;
**Step 205**, the EMS returns a notice to the NMS.

3. The method for transmission management of full configuration synchronization between the EML and the NML of claim 2, **characterized in that** Step S3 comprises the following steps: after having received the synchronization request from the NMS, the EMS starts a background parallel processing mechanism; according to object types and range designated by the NMS, the EMS generates management object in an XML format, and the EMS generates the XML configuration files, wherein the XML configuration files meets the following requirements:
(1) according to the object types, the configuration data is divided into a plurality of files in the XML format for storage, wherein the files are the XML configuration files, and the name of the package of all the XML configuration files is designated when the NMS sends the URL address of the target FTP file; the name of the XML configuration file for the storage of object is composed of such basic elements as the name of the object type, a data type, the time when the configuration data is generated as well as a file splitting sequence number;
(2) the XML configuration files are stored according to the object types, each XML configuration file only stores the list of one type of objects, the XML format of each object is kept consistent with the structure defined in TMF, and the time effectiveness of the configuration data is limited through XSD;
(3) the XML configuration files are generated by performing a splitting of the management objects according to the quantity of the management objects.

4. The method for transmission management of full configuration synchronization between the EML and the NML of claim 3, **characterized in that**: the format of the time in the name of the XML configuration file for the storage of the said object is "yyyyMMddhhmmss.x", wherein yyyy represents Year, MM represents Month, dd represents Date, hh represents Hour, mm represents Minute, ss represents Second, x represents one tenth of a second and is 0 as default; the format of the file splitting sequence number is [a_b], wherein a represents a sequence number of current file, b represents a total number of the XML configuration files after splitting, and both a and b are positive integers.

5. The method for transmission management of full configuration synchronization between the EML and the NML of claim 3, **characterized in that**, the Step S3 and the Step S4 are performed at the same time, and after the Step S3 and the Step S4 are completed, both enter the Step S5.

6. The method for transmission management of full configuration synchronization between the EML and the NML of claim 5, **characterized in that**, the step S5 comprises the following steps: according to the parameters sent by the NMS, the EMS in the background compresses all the XML configuration files into a data package and transfers the data package to the shared FTP server designated by the NMS.

7. The method for transmission management of full configuration synchronization between the EML and the NML of claim 6, **characterized in that**, Step S6 comprises the following steps: after transmission of the data package, the EMS sends a file transfer status notification message with the file transfer status completion ratio being 100% to the NMS; in this message, the time-out time of the next file transfer status notification message is written as 0; if the generation of the XML configuration files fails, a failure notice is sent to the NMS through a file transfer status notification message.

8. The method for transmission management of full configuration synchronization between the EML and the NML as disclosed in any of claims 1 to 7, **characterized in that**, in **Step 102**, the process of judging whether the file transfer status completion ratio is 100% is as follows: judging whether the file transfer status notification message with 100% file transfer status completion ratio is received, or the XML configuration files have existed on the shared FTP server; so long as any of both conditions is met, the file transfer status completion ratio is 100%.

9. The method for transmission management of full configuration synchronization between the EML and the NML as disclosed in any of claims 1 to 7, **characterized in that**, the basic configuration synchronization request in Step 101 comprises:
(1) a Uniform Resource Locator, URL, used to designate the shared FTP server; and the name of the designated XML configuration files uploaded by the EMS into the URL address;
(2) the designated certification information of the shared FTP server;
(3) Synchronization range;
(4) List of synchronous configuration types;
(5) the requirements for the XML configuration files, including: a maximal file size, whether compressed, a compression format, whether the configuration data on the shared FTP server is used, and the time effectiveness of the configuration data.

10. A system for transmission management of full configuration synchronization between an Element Management Level, EML, comprising a plurality of Element Management Systems, EMSes, and an Network Management Level, NML, comprising a plurality of network Management Systems, NMSes, with each NMS being able to manage multiple EMSes, with EMSes and NMSes being part of that system and being configured to perform all the steps of any of the method claims 1 to 9.

## Patentansprüche

1. Verfahren zur Übertragung der Verwaltung der vollständig konfigurierten Synchronisation zwischen einer Elementverwaltungsebene, EML, die mehrere Elementverwaltungssysteme, EMSe, umfasst, und einer Netzwerkverwaltungsebene, NML, die mehrere Netzwerkverwaltungssysteme, NMSe, umfasst, wobei jedes NMS in der Lage ist, mehrere EMSe zu verwalten,
**gekennzeichnet durch** die folgenden Schritte:
In Schritt S1 fordert ein Netzwerkverwaltungssystem, NMS, eine vollständig konfigurierte Synchronisation an, wobei ein Prozess der vollständig konfigurierten Synchronisation in drei parallele Datenverarbeitungsprozesse der Dauer der Konfigurationsdatenverarbeitungs- und Synchronisationszeit, die in jedem der Datenverarbeitungsprozesse benötigt wird, entsprechend unterteilt wird; wobei die drei parallelen Datenverarbeitungsprozesse ein Basiskonfigurationssynchronisationsanfrageprozess zur Verarbeitung von Basiskonfigurationsdaten, ein Netzwerkelementquersynchronisationsanfrageprozess zur Verarbeitung von Netzwerkelementquerkonfigurationsdaten, und ein Serviceroutingsynchronisationsanfrageprozess zur Verarbeitung von Serviceroutingkonfigurationsdaten ist; wobei Schritt S1 Schritt 101, Schritt 102, Schritt 103, Schritt 104, Schritt 105, Schritt 106, Schritt 107, Schritt 108 und Schritt 109 umfasst;
In Schritt 101 sendet das NMS die Basiskonfigurationssynchronisationsanfrage durch ein "Internet Inter-ORB Protocol/Simple Object Access Protcol"-, IIOP/SOAP, Interaktionsprotokoll an ein EMS;
In Schritt 102 beurteilt das NMS, ob eine Fortschrittsmitteilung bezüglich der Basiskonfigurationssynchronisationsanfrage Timeout oder Abschluss anzeigt; wobei das NMS eine Datenübertragungsstatusmitteilungsnachricht empfängt, die regelmäßig von dem EMS übertragen wird; wobei die Dateitransferstatusmitteilungsnachricht ein Dateitransferstatusabschlussverhältnis umfasst und ferner eine Timeoutzeit einer nächsten Dateitransferstatusmitteilungsnachricht umfasst; wobei die Timeoutzeit einer nächsten Dateitransferstatusmitteilungsnachricht die Zeit ist, zu der die nächste Dateitransferstatusmitteilungsnachricht erwartet wird; wobei das NMS beurteilt, ob das EMS der Timeoutzeit der nächsten Dateitransferstatusmitteilungsnachricht entsprechend einen Timeout aufweist und das NMS weiter den Fortschritt der Basiskonfigurationssynchronisationsanfrage überwacht, bis das Dateitransferstatusabschlussverhältnis bei 100 % ist, wenn kein Timeout vorliegt; wobei es im Fall des Timeout zu Schritt 101 zurückkehrt; nach mehreren Timeouts endet die vollständig konfigurierte Synchronisation; wenn kein Timeout vorhanden ist und das Dateitransferstatusabschlussverhältnis 50 % übersteigt, startet Schritt 104; wenn das Dateitransferstatusabschlussverhältnis bei 100 % liegt, startet Schritt 103;
In Schritt 103 verarbeitet das NMS die Basiskonfigurationsdaten;
In Schritt 104 sendet das NMS die Elementquersynchronisationsanfrage an das EMS durch das Interaktionsprotokoll IIOP/SOAP;
In Schritt 105 beurteilt das NMS, ob eine Fortschrittsmitteilung bezüglich der Netzwerkelementquerkonfigurationssynchronisationsanfra ge Timeout oder Abschluss anzeigt: das NMS beurteilt, ob das EMS einen Timeout aufweist, wobei das NMS eine Datenübertragungsstatusmitteilungsnachricht empfängt, die regelmäßig von dem EMS übertragen wird; wobei die Dateitransferstatusmitteilungsnachricht ein Dateitransferstatusabschlussverhältnis umfasst und ferner eine Timeoutzeit einer nächsten Dateitransferstatusmitteilungsnachricht umfasst; wobei die Timeoutzeit einer nächsten Dateitransferstatusmitteilungsnachricht die Zeit ist, zu der die nächste Dateitransferstatusmitteilungsnachricht erwartet wird; wobei das NMS beurteilt, ob das EMS nach der Timeoutzeit der nächsten Dateitransferstatusmitteilungsnachricht einen Timeout aufweist und das NMS weiter den Fortschritt der Netzwerkelementquerkonfigurationssynchronisationsanfra ge überwacht, bis das Dateitransferstatusabschlussverhältnis bei 100 % ist, wenn kein Timeout vorliegt; wobei es im Fall des Timeout zu Schritt 104 zurückkehrt; wenn kein Timeout vorhanden ist, und das Dateitransferstatusabschlussverhältnis 50 % übersteigt, startet Schritt 107; wenn das Dateitransferstatusabschlussverhältnis bei 100 % liegt, startet Schritt 106;
In Schritt 106 verarbeitet das NMS die Netzwerkelementquerkonfigurationsdaten;
In Schritt 107 sendet das NMS die Dienstroutingsynchronisationsanfrage an das EMS durch das Interaktionsprotokoll IIOP/SOAP;
In Schritt 108 beurteilt das NMS, ob eine Fortschrittsmitteilung bezüglich der Dienstroutingsynchronisationsanfrage Timeout oder Abschluss anzeigt; das NMS beurteilt, ob das EMS einen Timeout aufweist, wobei das NMS eine Datenübertragungsstatusmitteilungsnachricht empfängt, die regelmäßig von dem EMS übertragen wird; wobei die Dateitransferstatusmitteilungsnachricht ein Dateitransferstatusabschlussverhältnis umfasst und ferner eine Timeoutzeit einer nächsten Dateitransferstatusmitteilungsnachricht umfasst; wobei die Timeoutzeit einer nächsten Dateitransferstatusmitteilungsnachricht die Zeit ist, zu der die nächste Dateitransferstatusmitteilungsnachricht erwartet wird; wobei das NMS beurteilt, ob das EMS nach der Timeoutzeit der nächsten Dateitransferstatusmitteilungsnachricht einen Timeout aufweist und das NMS weiter den Fortschritt der Dienstroutingsynchronisationsanfrage überwacht, bis das Dateitransferstatusabschlussverhältnis bei 100 % ist, wenn kein Timeout vorliegt; wobei es im Fall des Timeout zu Schritt 107 zurückkehrt; wenn das Dateitransferstatusabschlussverhältnis bei 100 % liegt, startet Schritt 109;
In Schritt 109 verarbeitet das NMS die Dienstroutingkonfigurationsdaten;
In S2 empfängt das EMS eine Synchronisationsanfrage durch das Interaktionsprotokoll IIOP//SOAP, wobei die Synchronisationsanfrage die Basiskonfigurationssynchronisationanfrage, die Netzwerkelementquersynchronisationsanfrage oder die Dienstroutingsynchronisationsanfrage ist, und das EMS die Synchronisationsanfrage verarbeitet, wobei die Verarbeitung der Synchronisationsanfrage umfasst: das EMS beurteilt, ob die Synchronisationsanfrage dem aktuellen beschäftigten Status des EMS entsprechend verarbeitet werden soll, ob eine vollständig konfigurierte Synchronisation verarbeitet wird, sowie die Zeiteffektivität der Konfigurationsdaten;
In S3 führt das EMS eine asynchrone Erzeugung von XML-Konfigurationsdateien aus, um die Basiskonfigurationsdaten, die Netzwerkelementquerkonfigurationsdaten oder die Serviceroutingkonfigurationsdaten zu speichern;
In S4 meldet das EMS regelmäßig den Fortschritt, wobei das Merkmal das regelmäßige Übertragen einer Dateitransferstatusmitteilungsnachricht an das NMS umfasst, wobei die Dateitransferstatusmitteilungsnachricht ein Dateitransferstatusabschlussverhältnis umfasst und ferner eine Timeoutzeit einer nächsten Dateitransferstatusmitteilungsnachricht umfasst, wobei die Timeoutzeit einer nächsten Dateitransferstatusmitteilungsnachricht die Zeit ist, zu der die nächste Dateitransferstatusmitteilungsnachricht erwartet wird;
In S5 überträgt das EMS die XML-Konfigurationsdateien an einen geteilten FTP-Server;
In S6 meldet das EMS das abgeschlossene Ergebnis der Übertragung der XML-Konfigurationsdateien an das NMS;
wobei die Schritt S3 bis S6 nur ausgeführt werden, wenn das EMS beurteilt, dass die Synchronisationsanfrage in Schritt S2 verarbeitet werden soll.

2. Verfahren zur Übertragungsverwaltung der vollständig konfigurierten Synchronisation zwischen der EML und der NML aus Anspruch 1, **dadurch gekennzeichnet, dass** der Schritt S2 die folgenden Schritte umfasst:
In Schritt 201 beurteilt das EMS, ob das NMS die Konfigurationsdaten auf dem geteilten FTP-Server verwendet; wenn ja, wird mit Schritt 202 fortgefahren; andernfalls wird mit Schritt S3 fortgefahren;
In Schritt 202 beurteilt das EMS, ob eine weitere vollständig konfigurierte Synchronisation von anderen NMSen verarbeitet wird; wenn ja, wird mit Schritt 203 fortgefahren; andernfalls wird mit Schritt 204 fortgefahren;
In Schritt 203 gibt das EMS die folgenden Informationen an das NMS zurück: Status: eine Statusflag, die das NMS informiert, dass die andere vollständig konfigurierte Synchronisation verarbeitet wird, eine Timeoutzeit einer nächsten Dateitransferstatusmitteilungsnachricht und eine URL-Adresse einer Ziel-FTP-Datei; und das NMS wartet auf die nächste Dateitransferstatusmitteilungsnachricht nach der Timeoutzeit und kontrolliert, ob die Ziel-FTP-Datei auf dem geteilten FTP-Server existiert, und führt die Konfigurationsdatenverarbeitung aus;
In Schritt 204 beurteilt das EMS, ob es beschäftigt ist; wenn ja, wird mit Schritt 205 fortgefahren; andernfalls wird mit Schritt S3 fortgefahren;
In Schritt 205 gibt das EMS eine Mitteilung an das NMS zurück.

3. Verfahren zur Übertragungsverwaltung der vollständig konfigurierten Synchronisation zwischen der EML und der NML nach Anspruch 2, **dadurch gekennzeichnet, dass** Schritt S3 die folgenden Schritte umfasst: nach Empfang der Synchronisationsanfrage von dem NMS startet das EMS einen Parallelverarbeitungsmechanismus im Hintergrund; Zieltypen und Bereichen, die durch das NMS vorgegeben sind, entsprechend, erzeugt das EMS ein Verwaltungsobjekt in einem XML-Format, und das EMS erzeugt die XML-Konfigurationsdateien, wobei die XML-Konfigurationsdateien die folgenden Anforderungen erfüllen:
(1) den Objekttypen entsprechend sind die Konfigurationsdaten zum Speichern in mehrere Dateien im XML-Format unterteilt, wobei die Dateien die XML-Konfigurationsdateien sind, und der Name des Pakets aller XML-Konfigurationsdateien wird angegeben, wenn das NMS die URL-Adresse der Ziel-FTP-Datei sendet; der Name der XML-Konfigurationsdatei zum Speichern des Objekts besteht aus solchen Basiselementen wie dem Namen des Objekttyps, eines Datentyps, der Zeit, zu der die Konfigurationsdaten erzeugt werden, sowie einer Dateisplittingsequenznummer;
(2) die XML-Konfigurationsdateien werden den Objekttypen entsprechend gespeichert, wobei jede XML-Konfigurationsdatei nur die Liste eines Typs von Objekten speichert, das XML-Format jedes Objekts konsistent mit der Struktur gehalten wird, die in TMF definiert ist, und die Zeiteffektivität der Konfigurationsdaten durch XSD begrenzt ist;
(3) die XML-Konfigurationsdateien werden durch Durchführen eines Splittings der Verwaltungsziele der Menge der Verwaltungsobjekte entsprechend erzeugt.

4. Verfahren zur Übertragungsverwaltung der vollständig konfigurierten Synchronisation zwischen der EML und der NML aus Anspruch 3, **dadurch gekennzeichnet, dass**: das Format der Zeit im Namen der XML-Konfigurationsdatei für die Speicherung des Objekts " yyyyMMddhhmmss.x" ist, wobei yyyy das Jahr darstellt, MM das Monat darstellt, dd das Datum darstellt, hh die Stunde darstellt, mm die Minute darstellt, ss die Sekunde darstellt, x ein Zehntel einer Sekunde darstellt und standardmäßig 0 ist; das Format der Dateisplittingsequenznummer ist [a_b], wobei a eine Sequenznummer einer aktuellen Datei darstellt, b eine Gesamtanzahl der XML-Konfigurationsdateien nach dem Splitten darstellt und a und b beide positive ganze Zahlen sind.

5. Verfahren zur Übertragungsverwaltung einer vollständig konfigurierten Synchronisation zwischen der EML und der NML aus Anspruch 3, **dadurch gekennzeichnet, dass** der Schritt S3 und der Schritt S4 gleichzeitig ausgeführt werden und nach Abschluss des Schritts S3 und des Schritts S4 beide den Schritt S5 starten.

6. Verfahren zur Übertragungsverwaltung der vollständig konfigurierten Synchronisation zwischen der EML und der NML aus Anspruch 5, **dadurch gekennzeichnet, dass** der Schritt S5 die folgenden Schritte umfasst: den Parametern, die durch das NMS gesendet werden, entsprechend komprimiert das EMS im Hintergrund alle XML-Konfigurationsdateien in ein Datenpaket und überträgt das Datenpaket an den geteilten FTP-Server, der durch das NMS vorgegeben wird.

7. Verfahren zur Übertragungsverwaltung der vollständig konfigurierten Synchronisation zwischen der EML und der NML aus Anspruch 6, **dadurch gekennzeichnet, dass** Schritt S6 die folgenden Schritte umfasst: nach dem Übertragen des Datenpakets sendet das EMS eine Dateitransferstatusmitteilungsnachricht mit dem Dateitransferstatusabschlussverhältnis von 100 % an das NMS; in dieser Nachricht ist die Timeoutzeit der nächsten Dateitransferstatusmitteilungsnachricht als 0 eingetragen; wenn die Erzeugung der XML-Konfigurationsdateien fehlschlägt, wird durch eine Dateitransferstatusmitteilungsnachricht eine Fehlschlagsmeldung an das NMS gesendet.

8. Verfahren zur Übertragungsverwaltung der vollständig konfigurierten Synchronisation zwischen der EML und der NML wie in einem der Ansprüche 1 bis 7 offenbart, **dadurch gekennzeichnet, dass** in Schritt 102 der Prozess des Beurteilens, ob das Dateitransferstatusabschlussverhältnis 100 % beträgt, wie folgt abläuft: Beurteilen, ob die Dateitransferstatusmitteilungsnachricht mit einem Dateitransferstatusabschlussverhältnis 100 % empfangen wird, oder ob die XML-Konfigurationsdateien auf dem geteilten FTP-Server vorlagen; sofern eine der beiden Bedingungen erfüllt ist, ist das Dateitransferstatusabschlussverhältnis 100 %.

9. Verfahren zur Übertragungsverwaltung der vollständig konfigurierten Synchronisation zwischen der EML und der NML aus einem der Ansprüche 1 bis 7, **dadurch gekennzeichnet, dass** die Basiskonfigurationssynchronisationsanfrage in Schritt 101 umfasst:
(1) eine "Uniform Resource Locator", URL, die verwendet wird, den geteilten FTP-Server vorzugeben; und den Namen der vorgegebenen XML-Konfigurationsdateien, die durch das EMS auf die URL-Adresse hochgeladen werden;
(2) die vorgegebenen Zertifizierungsinformationen des geteilten FTP-Servers;
(3) den Synchronisationsbereich;
(4) Liste synchroner Konfigurationstypen;
(5) Anforderungen an die XML-Konfigurationsdateien, umfassend: eine maximale Dateigröße, ob komprimiert oder nicht, ein Kompressionsformat, ob die Konfigurationsdaten auf dem geteilten FTP-Server verwendet werden, und die Zeiteffektivität der Konfigurationsdaten.

10. System zur Übertragungsverwaltung der vollständig konfigurierten Synchronisation zwischen einer Elementverwaltungsebene, EML, umfassend mehrere Elementverwaltungssysteme, EMSe, und einer Netzwerkverwaltungsebene, NML, umfassend mehrere Netzwerkverwaltungssysteme, NMSe, wobei jedes NMS in der Lage ist, mehrere EMSe zu verwalten, wobei EMSe und NMSe Teil des Systems sind und konfiguriert sind, alle Schritte eines der Verfahrensansprüche 1 bis 9 auszuführen.

## Revendications

1. Procédé de gestion de transmission de synchronisation de configuration complète entre un niveau gestion d'élément, EML, comprenant une pluralité de systèmes de gestion d'élément, EMS, et un niveau gestion de réseau, NML, comprenant une pluralité de systèmes de gestion de réseau, NMS, chaque NMS étant apte à gérer de multiples EMS,
**caractérisé par** les étapes suivantes :
**Étape S1** : un système de gestion de réseau, NMS, demande une synchronisation de configuration complète, un processus de la synchronisation de configuration complète étant divisé en trois processus de traitement de données parallèles selon la durée de traitement de données de configuration et un temps de synchronisation nécessaire dans chacun des processus de traitement de données ; les trois processus de traitement de données parallèles étant un processus de demande de synchronisation de configuration de base consistant à traiter des données de configuration de base, un processus de demande de synchronisation inter-éléments de réseau consistant à traiter des données de configuration inter-éléments de réseau, et un processus de demande de synchronisation de routage de service consistant à traiter des données de configuration de routage de service ; l'étape S1 comprenant une étape 101, une étape 102, une étape 103, une étape 104, une étape 105, une étape 106, une étape 107, une étape 108 et une étape 109 ;
**Étape 101**, le NMS envoie la demande de synchronisation de configuration de base à un EMS par le biais d'un protocole d'interaction protocole inter-ORB Internet/protocole simple d'accès aux objets, IIOP/SOAP ;
**Étape 102**, le NMS détermine si une notification de progression en ce qui concerne la demande de synchronisation de configuration de base est arrivée à expiration ou achevée ; le NMS recevant un message de notification d'état de transfert de fichier transmis régulièrement par l'EMS ; le message de notification d'état de transfert de fichier comprenant un taux d'achèvement d'état de transfert de fichier et comprenant en outre un délai d'attente d'un prochain message de notification d'état de transfert de fichier ; le délai d'attente d'un prochain message de notification d'état de transfert de fichier étant le temps pendant lequel le prochain message de notification d'état de transfert de fichier est attendu ; le NMS déterminant si l'EMS est arrivé à expiration selon le délai d'attente du prochain message de notification d'état de transfert de fichier et le NMS continuant à surveiller la progression de la demande de synchronisation de configuration de base jusqu'à ce que le taux d'achèvement d'état de transfert de fichier soit de 100 % lorsqu'il n'y a pas d'expiration ; retournant à l'étape 101 en cas d'expiration ; mettant fin à la synchronisation de configuration complète après expiration à plusieurs reprises ; passant à l'étape 104 lorsqu'il n'y a pas d'expiration et que le taux d'achèvement d'état de transfert de fichier dépasse 50 % ; passant à l'étape 103 lorsque le taux d'achèvement d'état de transfert de fichier est de 100 % ;
**Étape 103**, le NMS traite les données de configuration de base ;
**Étape 104**, le NMS envoie la demande de synchronisation inter-éléments de réseau à l'EMS par le biais du protocole d'interaction IIOP/SOAP ;
**Étape 105**, le NMS détermine si une notification de progression en ce qui concerne la demande de synchronisation de configuration inter-éléments de réseau est arrivée à expiration ou achevée : le NMS détermine si l'EMS est arrivé à expiration, le NMS recevant un message de notification d'état de transfert de fichier transmis régulièrement par l'EMS, le message de notification d'état de transfert de fichier comprenant un taux d'achèvement d'état de transfert de fichier et comprenant en outre un délai d'attente d'un prochain message de notification d'état de transfert de fichier, le délai d'attente d'un prochain message de notification d'état de transfert de fichier étant le temps pendant lequel le prochain message de notification d'état de transfert de fichier est attendu ; le NMS déterminant si l'EMS est arrivé à expiration selon le délai d'attente du prochain message de notification d'état de transfert de fichier et le NMS continuant à surveiller la progression de la demande de synchronisation de configuration inter-éléments de réseau jusqu'à ce que le taux d'achèvement d'état de transfert de fichier soit de 100 % lorsqu'il n'y a pas d'expiration ; retournant à l'étape 104 en cas d'expiration ; passant à l'étape 107 lorsqu'il n'y a pas d'expiration et que le taux d'achèvement d'état de transfert de fichier dépasse 50 % ; passant à l'étape 106 lorsque le taux d'achèvement d'état de transfert de fichier est de 100 % ;
**Étape 106**, le NMS traite les données de configuration inter-éléments de réseau ;
**Étape 107**, le NMS envoie la demande de synchronisation de routage de service à l'EMS par le biais du protocole d'interaction IIOP/SOAP ;
**Étape 108**, le NMS détermine si une notification de progression en ce qui concerne la demande de synchronisation de routage de service est arrivée à expiration ou achevée, le NMS détermine si l'EMS est arrivé à expiration : le NMS recevant un message de notification d'état de transfert de fichier transmis régulièrement par l'EMS, le message de notification d'état de transfert de fichier comprenant un taux d'achèvement d'état de transfert de fichier et comprenant en outre un délai d'attente d'un prochain message de notification d'état de transfert de fichier, le délai d'attente d'un prochain message de notification d'état de transfert de fichier étant le temps pendant lequel le prochain message de notification d'état de transfert de fichier est attendu ; le NMS déterminant si l'EMS est arrivé à expiration selon le délai d'attente du prochain message de notification d'état de transfert de fichier et le NMS continuant à surveiller la progression de la demande de synchronisation de routage de service jusqu'à ce que le taux d'achèvement d'état de transfert de fichier soit de 100% lorsqu'il n'y a pas d'expiration; retournant à l'étape 107 en cas d'expiration ; passant à l'étape 109 lorsque le taux d'achèvement d'état de transfert de fichier est de 100 % ;
**Étape 109**, le NMS traite les données de configuration de routage de service ;
**S2**, l'EMS reçoit une demande de synchronisation par le biais des protocoles d'interaction IIOP/SOAP, la demande de synchronisation étant la demande de synchronisation de configuration de base, la demande de synchronisation inter-éléments de réseau ou la demande de synchronisation de routage de service, et l'EMS traite la demande de synchronisation, le traitement de la demande de synchronisation comprenant l'opération suivante : l'EMS détermine s'il faut traiter la demande de synchronisation selon l'état d'occupation courant de l'EMS, selon qu'une synchronisation de configuration complète est en cours de traitement ou non ainsi que selon l'applicabilité temporelle des données de configuration ;
**S3**, l'EMS effectue une génération asynchrone de fichiers de configuration XML, pour le stockage des données de configuration de base, des données de configuration inter-éléments de réseau ou des données de configuration de routage de service ;
**S4**, l'EMS rapporte régulièrement une progression, ladite fonction comprenant la transmission régulière d'un message de notification d'état de transfert de fichier au NMS, le message de notification d'état de transfert de fichier comprenant un taux d'achèvement d'état de transfert de fichier et comprenant en outre un délai d'attente d'un prochain message de notification d'état de transfert de fichier, le délai d'attente d'un prochain message de notification d'état de transfert de fichier étant le temps pendant lequel le prochain message de notification d'état de transfert de fichier est attendu ;
**S5**, l'EMS transfère les fichiers de configuration XML à un serveur FTP partagé ;
**S6**, l'EMS rapporte le résultat de transfert achevé des fichiers de configuration XML au NMS ;
dans lequel les étapes S3 à S6 sont effectuées seulement si l'EMS détermine de traiter la demande de synchronisation à l'étape S2.

2. Procédé de gestion de transmission de synchronisation de configuration complète entre l'EML et le NML selon la revendication 1, **caractérisé en ce que** l'étape S2 comprend les étapes suivantes :
**Étape 201**, l'EMS détermine si le NMS utilise les données de configuration présentes sur le serveur FTP partagé, si tel est le cas, passage à une étape 202 ; sinon, passage à l'étape S3 ;
**Étape 202**, l'EMS détermine si une autre synchronisation de configuration complète provenant d'autres NMS est en cours de traitement ; si tel est le cas, passage à une étape 203 ; sinon, passage à une étape 204 ;
**Étape 203**, l'EMS renvoie les informations suivantes au NMS : état : un drapeau d'état notifiant au NMS que l'autre synchronisation de configuration complète est en cours de traitement, un délai d'attente d'un prochain message de notification d'état de transfert de fichier et une adresse URL d'un fichier FTP cible ; et le NMS attend le prochain message de notification d'état de transfert de fichier selon le délai d'attente et inspecte si le fichier FTP cible existe sur le serveur FTP partagé et effectue le traitement de données de configuration ;
**Étape 204**, l'EMS détermine s'il est occupé ; si tel est le cas, passage à une étape 205 ; sinon, passage à l'étape S3 ;
**Étape 205**, l'EMS renvoie un avis au NMS.

3. Procédé de gestion de transmission de synchronisation de configuration complète entre l'EML et le NML selon la revendication 2, **caractérisé en ce que** l'étape S3 comprend les étapes suivantes : après avoir reçu la demande de synchronisation provenant du NMS, l'EMS démarre un mécanisme de traitement parallèle en arrière-plan ; selon des types d'objet et une plage désignés par le NMS, l'EMS génère un objet de gestion dans un format XML, et l'EMS génère les fichiers de configuration XML, les fichiers de configuration XML répondant aux exigences suivantes :
(1) selon les types d'objet, les données de configuration sont divisées en une pluralité de fichiers dans le format XML pour stockage, les fichiers étant les fichiers de configuration XML, et le nom du paquet de l'ensemble des fichiers de configuration XML est désigné lorsque le NMS envoie l'adresse URL du fichier FTP cible ; le nom du fichier de configuration XML pour le stockage d'objet est composé d'éléments de base tels que le nom du type d'objet, un type de données, l'instant auquel les données de configuration sont générées ainsi qu'un numéro de séquence de division de fichier ;
(2) les fichiers de configuration XML sont stockés selon les types d'objet, chaque fichier de configuration XML stocke la liste d'un seul type d'objets, le format XML de chaque objet reste conforme à la structure définie dans TMF, et l'applicabilité temporelle des données de configuration est limitée par le biais de XSD ;
(3) les fichiers de configuration XML sont générés par réalisation d'une division des objets de gestion selon la quantité des objets de gestion.

4. Procédé de gestion de transmission de synchronisation de configuration complète entre l'EML et le NML selon la revendication 3, **caractérisé en ce que** : le format de l'instant dans le nom du fichier de configuration XML pour le stockage dudit objet est « yyyyMMddhhmmss.x », yyyy représentant l'année, MM représentant le mois, dd représentant le jour, hh représentant l'heure, mm représentant la minute, ss représentant la seconde, x représentant un dixième de seconde et valant 0 par défaut ; le format du numéro de séquence de division de fichier est [a_b], a représentant un numéro de séquence d'un fichier courant, b représentant un nombre total des fichiers de configuration XML après division, et a et b étant tous les deux des entiers positifs.

5. Procédé de gestion de transmission de synchronisation de configuration complète entre l'EML et le NML selon la revendication 3, **caractérisé en ce que** l'étape S3 et l'étape S4 sont effectuées en même temps, et après achèvement des étapes S3 et S4, les deux passent à l'étape S5.

6. Procédé de gestion de transmission de synchronisation de configuration complète entre l'EML et le NML selon la revendication 5, **caractérisé en ce que** l'étape S5 comprend les étapes suivantes : selon les paramètres envoyés par le NMS, l'EMS en arrière-plan compresse tous les fichiers de configuration XML en un paquet de données et transfère le paquet de données au serveur FTP partagé désigné par le NMS.

7. Procédé de gestion de transmission de synchronisation de configuration complète entre l'EML et le NML selon la revendication 6, **caractérisé en ce que** l'étape S6 comprend les étapes suivantes : après transmission du paquet de données, l'EMS envoie un message de notification d'état de transfert de fichier ayant le taux d'achèvement d'état de transfert de fichier de 100 % au NMS ; dans ce message, le délai d'attente du prochain message de notification d'état de transfert de fichier est écrit comme étant 0 ; si la génération des fichiers de configuration XML échoue, un avis d'échec est envoyé au NMS par le biais d'un message de notification d'état de transfert de fichier.

8. Procédé de gestion de transmission de synchronisation de configuration complète entre l'EML et le NML selon l'une quelconque des revendications 1 à 7, **caractérisé en ce que**, à l'étape 102, le processus consistant à déterminer si le taux d'achèvement d'état de transfert de fichier est de 100 % est comme suit : déterminer si le message de notification d'état de transfert de fichier ayant un taux d'achèvement d'état de transfert de fichier de 100 % est reçu, ou si les fichiers de configuration XML existent déjà sur le serveur FTP partagé ; tant que l'une ou l'autre des deux conditions est satisfaite, le taux d'achèvement d'état de transfert de fichier est de 100 %.

9. Procédé de gestion de transmission de synchronisation de configuration complète entre l'EML et le NML selon l'une quelconque des revendications 1 à 7, **caractérisé en ce que** la demande de synchronisation de configuration de base à l'étape 101 comprend :
(1) un localisateur uniforme de ressource, URL, utilisé pour désigner le serveur FTP partagé ; et le nom des fichiers de configuration XML désignés téléchargés à partir de l'EMS à l'adresse URL ;
(2) les informations de certification désignées du serveur FTP partagé ;
(3) une plage de synchronisation ;
(4) une liste de types de configuration synchrone ;
(5) les exigences pour les fichiers de configuration XML, y compris : une taille maximale de fichier, s'il est compressé, un format de compression, si les données de configuration présentes sur le serveur FTP partagé sont utilisées, et l'applicabilité temporelle des données de configuration.

10. Système de gestion de transmission de synchronisation de configuration complète entre un niveau gestion d'élément, EML, comprenant une pluralité de systèmes de gestion d'élément, EMS, et un niveau gestion de réseau, NML, comprenant une pluralité de systèmes de gestion de réseau, NMS, chaque NMS étant apte à gérer de multiples EMS, les EMS et les NMS faisant partie de ce système et étant configurés pour effectuer toutes les étapes de l'une quelconque des revendications de procédé 1 à 9.
